# EUROPEAN PATENT APPLICATION

(11) **EP 1 331 286 A2**
(43) Date of publication of application: **30.07.2003**
(21) Application number: 03250435.9
(22) Date of filing: 23.01.2003
(51) Int. Cl.: C23C 18/16, H01G 4/12

(54) **Method of electroless plating and ceramic capacitor**

(30) Priority: 23.01.2002 GB 0201441
(71) Applicant: Oxley Developments Company Limited, Ulverston Cumbria LA12 9QG (GB)
(72) Inventor: Denison, Kieth, Cumbria, LA12 7JY (GB); Henderson, William Ferndale, Cumbria, LA11 7EN (GB)
(74) Representative: W.P. Thompson & Co.

(57) **Abstract**

The invention provides a method of selectively applying an electroless plating to a ceramic body, comprising: selectively applying an organosilicon polymer plating resist to a surface of the ceramic body to form a protected area having the resist, an unprotected area remaining elsewhere; seeding the unprotected area of the ceramic body, the protected area remaining unseeded; activating the unprotected area of the ceramic body with an aqueous solution of a palladium salt, the protected area remaining unaffected; and carrying out selective electroless plating of the unprotected area without removing the plating resist, leaving the protected areas unplated.

The invention also relates to a monolithic ceramic planar array (2) of capacitors having connections formed upon interior faces of cavities in the ceramic by the selective electroless plating method.

The invention further relates to the use of an organosilicon polymer as a plating resist to protect a ceamic surface against electroless plating.

## Description

The present invention relates to electroless plating, particularly to selective electroless plating of ceramic capacitors.

A well known use of ceramic capacitors is in screening of electromagnetic interference. For this purpose it is known to fabricate and package a number of capacitors in a multilayer ceramic planar array comprising a monolithic ceramic body having holes through which pass a number of metal contact pins each connected to a capacitor which is formed by metal layers within the ceramic body and whose opposite side is led to ground through a metal layer on the exterior periphery of the ceramic body. In this way filtering is provided for the signals carried by the pins. Planar arrays may for example be incorporated in electrical connectors and can be highly compact.

Ceramic capacitors, and in particular multilayer ceramic planar arrays, utilise metal electrodes or terminations to provide the electrodes for the capacitor or, in the case of the planar arrays, the necessary electrical connection to the contact pins. Traditionally these electrodes are formed by metallization using silver or silver palladium pastes screen printed onto flat ceramic surfaces or dipped or hand painted onto non-flat surfaces such as the end terminations of ceramic multilayer chip capacitors or inside the axial holes and on the circumference of planar arrays. After application to the ceramic surfaces, the metallization pastes, which comprise mixtures of glass and metal particles, are fired at temperatures to the order of 800°C to fuse the glass and metal particles together and to the ceramic surfaces. To achieve optimum electrical performance and solderability the fired surfaces can be subsequently electroplated with silver, nickel and/or gold.

In general, monolithic capacitors are required to be small in size while having a large capacitance. In order to produce such capacitors, the metallised film must be deposited thinly and uniformly. This is difficult to achieve by screen printing, which results in variations in thickness of the metallised layer.

An alternative known method of depositing a metal layer on a ceramic body is by electroless plating. Nickel can be plated onto ceramic by an electroless process involving first "seeding" the non-conducting ceramic with tin and palladium ions. The conventional seeding process involves immersion of the ceramic in a liquid to seed its entire surface. The electroless plating then deposits over the surface of the ceramic and the necessary isolation of the capacitor's terminations/electrodes is usually achieved by a mechanical process such as cutting or grinding. For example, in the electroless plating, metallization of tubular ceramic, capacitor tubes can be plated all over and by grinding the ends of the tubes after plating the outer cylindrical electrode can be physically isolated from the internal cylindrical electrode. In the case of known single layer (rectangular) chip ceramic capacitors, large plates of the ceramic can be plated all over and the isolation of the electrodes can be achieved by diamond slitting of the plate into many rectangles as in silicon technology.

This approach is problematic when applied to a component such as a planar capacitor array, requiring metallization not only on flat surfaces but also on its outer periphery and around each of the holes, so that a reliable solder connection can be made, in particular to the connector pins.

It is well known to selectively *electro*-plate metal, eg. gold, by applying nonconductive plating resist coatings which do not receive the electro-plated deposit.

However when the same technique is applied in electroless plating of nonconductive ceramic which has been seeded, the seeding also activates the plating resist and thus the electroless plating coats both the bare ceramic and those parts having the plating resist.

An aim of the present invention is to provide a method of selectively metallising a ceramic surface, particularly a non-flat surface. A further aim is to improve the formation of plural, separate electrodes on a ceramic substrate. It is particularly desired to facilitate formation of such electrodes on non-flat surfaces. Additionally or alternatively it is an aim of the present invention to facilitate metallisation of closely pitched openings, which are for example found in modern electronic connectors.

In accordance with a first aspect of the present invention there is provided a method of selectively applying an electroless plating to a ceramic body, comprising:
selectively applying an organosilicon polymer plating resist to a surface of the ceramic body to form a protected area having the resist, an unprotected area remaining elsewhere;
seeding the unprotected area of the ceramic body, the protected area remaining unseeded;
activating the unprotected area of the ceramic body with an aqueous solution of a palladium salt, the protected area remaining unaffected; and
carrying out selective electroless plating of the unprotected area without removing the plating resist, leaving the protected areas unplated.

Preferably, the method is applied to fabrication of an electrical or electronic component having a plurality of electrodes. The plated areas of the ceramic body form the electrodes of the component. Ceramic capacitors may in particular be fabricated in this way. In a further preferred embodiment the component in question is a connector having holes which are plated according to the invention and through which electrical connections are formed.

Preferably the seeding involves sensitisation of the ceramic surface with tin (II) ions. It is further preferred that this step is followed by activation with palladium. It is particularly preferred that seeding of the ceramic is carried out using α-PdCl₂, preferably in aqueous solution.

The surface of the ceramic is preferably prepared prior to plating with acid, more preferably hydrofluoric acid.

The metal which is plated onto the ceramic is preferably nickel. Preferably the electroless plating stage utilises boron nickel.

Preferably the palladium salt includes PdCl₂, more preferably α-PdCl₂.

In contrast to known methods of electroless plating, the resist is inert and is left in place and is not removed prior to the plating step. Electroless plating takes place selectively only on the unprotected areas, which have been sensitised and activated.

In accordance with a second aspect of the present invention, there is provided a ceramic capacitor having at least two electrodes formed on the ceramic by the selective electroless plating method of the first aspect of the invention.

Preferably, the capacitor is part of a monolithic ceramic planar array of capacitors. In such an embodiment, connections to the capacitors are preferably formed through electroless plating upon the interior faces of holes or cavities in the ceramic.

In accordance with a third aspect of the invention there is provided the use of an organosilicon polymer as a plating resist to protect a ceramic surface against electroless plating.

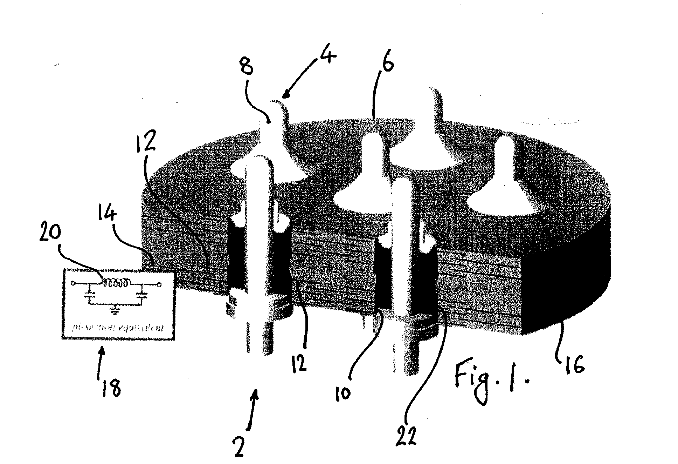

A specific embodiment of the present invention will now be described in detail, by way of example only, with reference to the accompanying drawing which is a perspective illustration of a planar ceramic array which can be manufactured in accordance with the present invention.

It is well known to carry out electroless plating on non-ferrous substrates, such as ceramics, by reduction of nickel through the use of acidified tin (II) salts and acidified palladium. The palladium ions conventionally used in the plastics and ceramics industry generate PdCl₄²⁻ ions when placed in hydrochloric acid.

The present embodiment of the invention similarly involves the use of tin (II) ions, but differs in using aqueous α-PdCl₂.

In order to selectively plate the termination surface with electroless nickel a "plating resist" arrangement needs to be in place. The plating resist in use performs a two-fold operation; it firstly protects the surface for plating, and secondly provides electrical isolation for the capacitor between holes. In the present embodiment, an organosilicon polymer, is applied as a resist to the ceramic surface.

Preparation of the unprotected surface prior to plating is achieved with the use of hydrofluoric acid. Hydrofluoric acid is a well known etchant of glass. The effect on barium titanate based ceramics is similar, but the temperature, time and concentration conditions must be controlled. A solution of hydrofluoric acid at 25-30°C is used as a microetchant for cleaning and preparing the ceramic surface at a concentration and time such as to give the required adhesion of the electroless nickel plate depending on the porosity/packing density of the ceramic body.

The unprotected areas of the surface are then sensitised with acidified tin (II) chloride ions followed by activation with palladium with this providing nucleation for the subsequent electroless deposition of nickel. Control of speciation in each of the two steps above is critical for the resist to remain unseeded, and for the electroless plating to take place selectively only on the unprotected areas.

The ceramic surface is treated with a solution of tin(II) chloride (98.0 - 100% Assay Analar) employing a concentration of hydrochloric acid (enough to stop oxidation of the tin (II) ions to tin (IV) together with a metal content that over time produces monolayer coverage of the surface upon immersion.

The ceramic surface is then immersed in a solution of palladium (II) chloride of a concentration that produces monolayer coverage before further rinsing in water for 30 seconds. The palladium (II) chloride used for this stage must be of very high purity since the presence of any impurity will result in the adsorption of non-specified species. The palladium species generally used for nucleating a metal deposit are those of PdCl₄²⁻ which are created by PdCl₂ in the presence of hydrochloric acid. However, within the system of the present invention the PdCl₂ is displaced in deionised water to produce hydrated palladium (II) ions. The activation step of the present invention is therefore carried out in the absence of hydrochloric acid.

Electroless nickel plating of the unprotected areas of the ceramic surface is then carried out by treating the surface with a proprietary solution of boron nickel supplied by Lea Manufacturing under the name of Niklad 752. This solution is designed to produce bright, uniform nickel alloy deposits containing a maximum of 1% boron. The deposits have low internal stress and are characterised by resistance to high temperature, good solderability and a high degree of hardness (max 1% Boron), which improves their resistance to wear. The surface is then treated with the solution at a pH of 5.5-6.5 and a temperature of 68°C for a period of time such as to give sufficient thickness for electrical performance.

In the present embodiment, the nickel-plated surface is further plated with gold. The plated surface is contacted with a nickel activator at 50 °C for 30 seconds before immersing in a gold plating solution at 70 °C, pH 5.8 - 6.3 to deposit a layer of approximately 0.3 µm of gold plate.

Whereas electroless nickel plating typically involves electroless phosphorus, the present embodiment utilises electroless boron.

Boron nickel has advantages over phosphorus nickel in its electrical characteristics and in the purity of the deposit. The process however works well with phosphorus nickel, which can instead be used.

An example of a component which can be fabricated by the above technique is illustrated in the drawing and is a planar ceramic array 2 used for electromagnetic filtering. It is well suited to incorporation in an electrical connector, having contact pins 4 passing through the discoidal ceramic body 6 and so providing male projecting portions 8 for receipt in a female socket. Holes 10 in the ceramic body are metallized on their internal surfaces to allow formation of connections from the pins 4 to capacitor plates 12 interleaved with further capacitor plates 14, connected in their turn to metallization 16 on the outer periphery of the ceramic body. In use the metallization 16 is led to ground. The equivalent circuit, for each pin 4, is seen inset at 18. Note that inductance 20 is provided by a ferrite inductor 22 disposed around each pin 4 and forming the connection to the capacitor plates 12.

The use of electroless plating to achieve the required selective metallization allows this to be done economically with good thickness control and hence cost reduction in precious metal usage.

The selective seeding and electroless plating technique thus implemented enables plating resistant coatings to be used which do not receive the electroless deposits, the uncoated surface of the ceramic being chemically seeded to receive electroless plating. Thus in one mass production process ceramic capacitors can be metallized in a cost effective way and in miniature structures previously considered difficult and unreliable to manufacture.

## Claims

1. A method of selectively applying an electroless plating to a ceramic body, comprising:
selectively applying an organosilicon polymer plating resist to a surface of the ceramic body to form a protected area having the resist, an unprotected area remaining elsewhere;
seeding the unprotected area of the ceramic body, the protected area remaining unseeded;
activating the unprotected area of the ceramic body with an aqueous solution of a palladium salt, the protected area remaining unaffected; and
carrying out selective electroless plating of the unprotected area without removing the plating resist, leaving the protected areas unplated.

2. A method according to claim 1 wherein the seeding involves sensitisation of the ceramic surface with tin (II) ions.

3. A method according to claim 2 wherein the tin (II) ions are supplied in the form of an acidified solution of tin (II) chloride.

4. A method according to any one of the preceding claims wherein the surface of the ceramic is prepared with acid prior to plating.

5. A method according to claim 4 wherein the acid is hydrofluoric acid.

6. A method according to any one of the preceding claims wherein the electroless plating stage uses nickel.

7. A method according to claim 6 wherein the nickel is boron nickel.

8. A method according to any one of the preceding claims wherein the palladium salt includes α-PdCl₂.

9. A ceramic capacitor having at least two electrodes formed on the ceramic by the selective electroless plating method of any one of claims 1-8.

10. A monolithic ceramic planar array of capacitors having connections formed upon interior faces of cavities in the ceramic by the selective electroless plating method of any one of claims 1-8.

11. Use of an organosilicon polymer as a plating resist to protect a ceramic surface against electroless plating.
